# FASCICULE DE BREVET EUROPEEN

(11) **EP 3 044 077 B1**
(45) Date de publication et mention de la délivrance du brevet: **11.12.2019**
(21) Numéro de dépôt: 14777720.5
(22) Date de dépôt: 05.09.2014
(51) Int. Cl.: B62D 35/00, B62D 29/04, B60J 5/10

(54) **BECQUET POUR HAYON DE VÉHICULE AUTOMOBILE**
SPOILER FÜR EINE HECKKLAPPE EINES KRAFTFAHRZEUGS
SPOILER FOR A TAILGATE OF A MOTOR VEHICLE

(30) Priorité: 09.09.2013 FR 1358659
(43) Date de publication de la demande: 20.07.2016
(73) Titulaire: Compagnie Plastic Omnium, 69007 Lyon (FR)
(72) Inventeur: DEMANGE, Jean-Yves, F-01500 Amberieu en Bugey (FR); COUDRON, Philippe, F-69300 Caluire et Cuire (FR); HACHE, Bertrand, F-07430 Saint Cyr (FR); STRUSS, Martin, 84103 Bratislava (SK); COUTANCEAU, Samuel, F-69001 Lyon (FR)
(74) Mandataire: Remy, Vincent Noel Paul
(86) Numéro de dépôt international: PCT/FR2014/052204
(87) Numéro de publication internationale: WO 2015/033077

(56) Documents cités:
- EP-A1- 2 620 355
- DE-A1-102008 026 131
- DE-U1-202012 102 063
- FR-A1- 2 932 767
- US-A1- 2010 026 045

## Description

La présente invention concerne le domaine de l'automobile, et plus particulièrement le domaine des becquets en matière thermoplastique pour hayon de véhicule automobile.

On appelle becquet (ou spoiler en anglais ou aileron) une pièce de carrosserie destinée à améliorer l'aérodynamique du véhicule sur laquelle cette pièce est placée. Les becquets sont également utilisés pour des aspects esthétiques (style) du véhicule. Ils sont situés et fixés en partie haute du hayon, juste au-dessus du bord supérieur de la lunette. L'assemblage de la lunette sur le hayon est effectué par une opération de collage qui réalise à la fois la fixation de la lunette et la fonction d'étanchéité. Afin de préserver l'intégrité du joint de colle, déposé généralement sous forme d'un cordon continu, il est nécessaire d'approcher et positionner la lunette et presser la colle par une trajectoire incidente quasi perpendiculaire à la piste de collage : cette contrainte d'assemblage impose donc que la trajectoire d'amenée de la lunette n'entre pas en interférence avec un autre élément environnant, notamment le becquet.

On connaît un premier concept de becquet selon lequel la peau de becquet (pièce de style et d'aérodynamisme) est fixée directement sur le caisson de hayon, et ce avant l'opération de collage de la lunette, et peut contribuer à renforcer structurellement le hayon par son collage périphérique. L'avantage du becquet selon ce concept est qu'il est limité à une seule pièce, la peau.

Cependant la proéminence vers l'arrière du véhicule, de la partie saillante du becquet au-dessus de la lunette est limitée par la trajectoire d'amenée au collage de la lunette. Le styliste et l'aérodynamique n'ont pas entière liberté quant à la longueur dépassant de cette partie saillante. De plus, du fait de l'ordre d'assemblage du becquet puis de la lunette, le bord supérieur de la lunette reste visible : il en résulte un jeu extrêmement visible et critiqué en termes d'aspect (qualité perçue) entre le bord supérieur de la lunette et le bord inférieur de la partie saillante du becquet. Enfin, la peau n'est pas soutenue, donc elle est très déformable. Ce concept impose de limiter le dépassement vers l'arrière de la partie saillante du becquet (partie proéminente au-dessus de la lunette) vis-à-vis de la trajectoire d'amenée au collage de la lunette

On connaît un second concept de becquet selon lequel, le becquet comporte également une pièce de doublure, cette doublure servant de renfort et de liaison avec le hayon, et constituant un sous-ensemble assemblé, qui est livré en bord de chaine chez le constructeur automobile. Dans ce concept, ce sous-ensemble est aussi fixé sur la doublure du hayon (tôle, thermodurcissable, thermoplastique) mais après avoir été préalablement collé la lunette sur le hayon.

Cependant, selon ce concept, il n'y a pas ou peu de contribution structurel du becquet au hayon. De plus il peut y avoir une multiplication des technologies d'assemblage.

Par ailleurs et de façon générale, les véhicules doivent comporter un troisième feu de stop. Pour des raisons de visibilité, il est très favorable que ce feu stop soit implanté sur un point haut du véhicule et en position centrale dans la largeur du véhicule ; il est donc très fréquent de devoir prévoir un emplacement pour ce feu de stop dans le becquet, en particulier dans sa partie saillante vers l'arrière du véhicule.

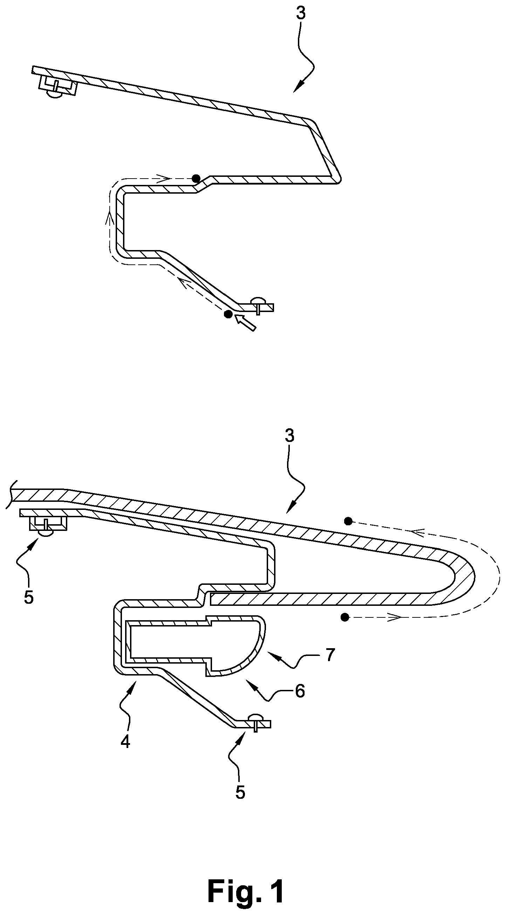

Or un becquet en matière thermoplastique est réalisé par injection. Ce procédé de moulage étant notamment contraint par le paramètre de longueur d'écoulement, comme l'illustre la figure 1, qui limite la distance parcourue dans le moule par la matière injectée. Du fait des formes à ajouter pour intégrer le logement et la fixation du feu de stop dans la peau de becquet, la longueur dépassante de la partie saillante du becquet ne peut être aussi grande que souhaitée par le style ou l'aérodynamique du véhicule.

On connaît du document FR 2 932 767 un becquet pour hayon de véhicule automobile comprenant une peau de style fournissant une apparence externe au becquet s'étendant en saillie vers l'arrière du véhicule, et un élément de renforcement de la peau de style fixé à la peau de style, comportant des moyens de fixation au hayon. L'élément de renforcement comporte vers l'arrière du véhicule au moins un logement pouvant accueillir un équipement technique,

L'invention a pour but de remédier à ces inconvénients en proposant un becquet comportant une partie saillante en thermoplastique rallongée et supporté par un élément de renforcement (4) et de fixation au hayon, permettant de recevoir un feu de stop.

Ainsi, l'objet de l'invention concerne un becquet pour hayon de véhicule automobile comprenant :
- une peau de style fournissant une apparence externe au becquet, et s'étendant en saillie vers l'arrière du véhicule, de façon à améliorer l'aérodynamique et/ou le style du véhicule ; et
- un élément de renforcement de la peau de style fixé à la peau de style, comportant des moyens de fixation au hayon, et comportant vers l'arrière du véhicule au moins un logement pouvant accueillir un équipement technique,
caractérisé en ce que l'élément de renforcement est adapté à former un corps creux une fois rapporté sur le hayon et constitue une pièce de fermeture sur le hayon en formant un corps creux.

La peau de style et l'élément de renforcement peuvent être en matière thermoplastique
De préférence, l'élément de renforcement comporte au niveau de sa base vers l'arrière du véhicule, un renfoncement dont la forme et les dimensions sont choisies pour permettre une trajectoire d'amenée de lunette sensiblement perpendiculaire à un plan moyen d'une piste de collage située sur un caisson du hayon, lors du collage de lunette sur le hayon.

De préférence, l'élément de renforcement est adapté à former un corps creux avec le caisson une fois rapporté sur le hayon.

Selon l'invention, l'élément de renforcement peut comporter, de préférence au niveau de la zone saillante vers l'arrière du véhicule, au moins une forme concave, par exemple une encoche coopérant avec au moins une forme convexe complémentaire, par un exemple une nervure de la peau de style apte à guider, positionner et fixer la peau de style sur l'élément de renforcement.

Selon l'invention, la peau de style comporte, de préférence au niveau de son bord situé vers l'avant du véhicule, un moyen de fixation sur hayon vers l'avant du véhicule. Par exemple, la peau de style (3) peut comporter des fixations positives démontables de type vis ou rivets expansifs à pétales.

L'invention sera mieux comprise à la lecture des figures annexées, qui sont fournies à titre d'exemples et ne présentent aucun caractère limitatif, dans lesquelles :
La figure 1 illustre le problème lié au procédé d'injection pour fabriquer un becquet.
La figure 2 illustre un becquet selon l'invention.

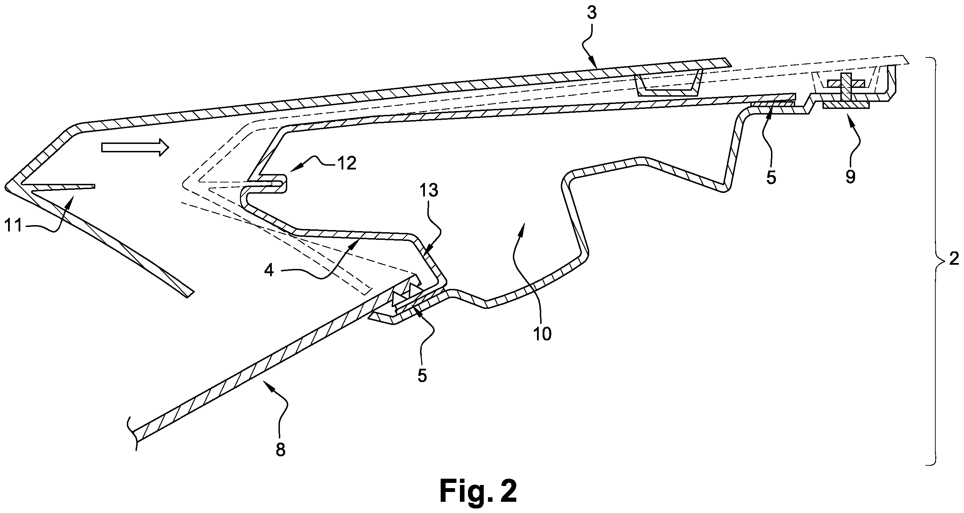

On se réfère maintenant aux figures 1 et 2.

Le becquet (1) pour hayon (2) de véhicule automobile, s'étend latéralement par rapport à la carrosserie de véhicule, sur la largeur du véhicule. Il comporte :
- une peau de style (3) fournissant une apparence externe au becquet, et s'étendant en saillie vers l'arrière du véhicule; et
- un élément de renforcement (4) de la peau de style (3) fixé à la peau de style (2), comportant des moyens de fixation (5) au hayon, et comportant vers l'arrière du véhicule au moins un logement (6) pouvant accueillir un équipement technique (7).

De part son logement (6), l'élément de renforcement (4) constitue une interface pour des équipements techniques (7), comme un troisième feu stop.

Selon l'invention, la peau de style injectée n'assurant que les fonctions d'aérodynamique et d'esthétique du véhicule, et non plus la fonction d'interface d'intégration d'équipements, la partie saillante peut s'étendre plus loin vers l'arrière du véhicule en fonction des besoins de style et d'aérodynamique, étant moins contrainte par le paramètre de longueur d'écoulement inhérent au procédé de moulage par injection. Cette conception permet d'accroitre sensiblement la longueur de la partie saillante sans être non plus gêné dans la trajectoire d'amenée de la lunette (8).

Selon un mode de réalisation, l'élément de renforcement (4) comporte de préférence au niveau de la zone saillante vers l'arrière du véhicule, au moins une forme concave coopérant avec au moins une forme convexe complémentaire de la peau de style (3) apte à guider, positionner et fixer la peau de style (3) sur l'élément de renforcement (4).

Par exemple, l'élément de renforcement (4) comporte peut comporter au moins une encoche (12) coopérant avec au moins une nervure (11) de la peau de style (3). De préférence, l'encoche (12) et la nervure (11), une fois emboitées, réalisent un positionnement et maintien relatif vertical entre la peau et l'élément de renforcement, par exemple en étant orientées à l'horizontale. L'encoche (12) et la nervure (11), peuvent être soit continues le long du bord arrière du becquet ou discontinues. Les formes en saillies de la peau et de l'élément de renforcement présentent des formes équivalentes respectivement concave et convexe, pouvant s'emboiter et positionnées entre elles, par le système encoche/nervure et l'appui au niveau des faces des saillies de chacune des pièces. De préférence, la nervure (son pied) est issue d'une ligne de style.

En complément de ce moyen de fixation, la peau de style (3) peut comporter un moyen de fixation (9) sur hayon (2) vers l'avant du véhicule. Il peut s'agir de fixations positives démontables de type vis ou rivets expansifs à pétales, de façon à être fixée sur le hayon La peau de style (3) est de préférence en matière thermoplastique.

L'élément de renforcement (4) peut être en matière thermodurcissable ou en matière thermoplastique.

Pour la peau de style (3) ou pour l'élément de renforcement (4), la matière thermoplastique peut être choisie dans les matières suivantes :
- polypropylène (PP) ;
- polyamide (PA) ;
- polyéthylène (PE) ;
- acrylonitrile butadiène styrène (ABS) ;
- polyéthylène téréphtalate (PET) ;
- polystyrène (PS) ;
- polycarbonate (PC) ;
- poly méthacrylate de méthyle (PMMA) ;
- ainsi que toutes variantes et toutes combinaisons de ces matières ou variantes.

L'assemblage de la lunette (8) sur le hayon est effectué par une opération de collage qui réalise à la fois la fixation de la lunette (8) et la fonction d'étanchéité. Afin de préserver l'intégrité du joint de colle, déposé généralement sous forme d'un cordon continu, il est nécessaire d'approcher et positionner la lunette (8) et presser la colle par une trajectoire incidente quasi perpendiculaire à la piste de collage.

A cette fin, l'élément de renforcement (4) comporte de préférence au niveau de sa base vers l'arrière du véhicule, c'est-à-dire dans sa zone de fixation avec le hayon proche de la lunette (8), un renfoncement (13), dont la forme et les dimensions sont choisies pour permettre une amenée de lunette (8) perpendiculaire au hayon (2) lors de son approche finale pour son collage de lunette (8) sur le hayon (2). Par exemple, le renfoncement peut définir un volume permettant un positionnement et plaquage final de la lunette par translation ou rotation (type embectage). De préférence, la forme et les dimensions sont également choisies pour masquer le bord haut de la lunette (8) par la paroi inférieure de la saillie de peau.

Selon l'invention, l'élément de renforcement (4) est adapté à former un corps creux, (10), une fois rapporté sur le hayon (2).

Selon l'invention, l'élément de renforcement (4) constitue une pièce de fermeture sur le hayon (2) en formant un corps creux, ou caisson (10). De cette façon, l'élément de renforcement (4) augmente la rigidité de la partie du hayon (2) entre les charnières. Il forme alors une poutre avec corps creux.

De préférence ce caisson est étanche, de façon à ce que les équipements techniques (7) de l'élément de renforcement (4) puissent être des équipements électriques, tels qu'un feu de stop. Le feu stop est alors monté par l'extérieure du véhicule.

Au niveau du procédé de fabrication, l'élément de renforcement (4) est fixé sur le hayon (2), par collage par exemple, puis la lunette (8) est collée sur le hayon (2).

Enfin, la peau de style est rapportée sur l'élément de renforcement (4) et éventuellement également sur le hayon (2).

## Revendications

1. Becquet (1) pour hayon (2) de véhicule automobile, comportant :
- une peau de style (3) fournissant une apparence externe au becquet (1), et s'étendant en saillie vers l'arrière du véhicule ; et
- un élément de renforcement (4) de la peau de style (3) fixé à la peau de style (3), comportant des moyens de fixation (5) au hayon (2) et comportant vers l'arrière du véhicule au moins un logement (6) pouvant accueillir un équipement technique (7),
**caractérisé en ce que** l'élément de renforcement (4) est adapté à former un corps creux (10) une fois rapporté sur le hayon (2) et constitue une pièce de fermeture sur le hayon (2) en formant un corps creux (10).

2. Becquet selon la revendication 1, dans lequel la peau de style (3) est en matière thermoplastique.

3. Becquet selon la revendication 1, dans lequel l'élément de renforcement (4) est en matière thermoplastique.

4. Becquet selon l'une des revendications précédentes, dans lequel l'élément de renforcement (4) comporte au niveau de sa base vers l'arrière du véhicule, un renfoncement (13) dont la forme et les dimensions sont choisies pour permettre une trajectoire d'amenée de lunette (8) sensiblement perpendiculaire à un plan moyen d'une piste de collage située sur un caisson du hayon (2), lors du collage de lunette (8) sur le hayon (2).

5. Becquet selon l'une des revendications précédentes, dans lequel l'élément de renforcement (4) comporte au moins une forme concave (12) coopérant avec au moins une forme convexe complémentaire (11) de la peau de style (3), lesdites formes étant aptes à guider, positionner et fixer la peau de style (3) sur l'élément de renforcement (4).

6. Becquet selon la revendication 5, dans lequel l'élément de renforcement (4) comporte au moins une encoche (12) coopérant avec au moins une nervure (11) de la peau de style (3).

7. Becquet selon l'une des revendications précédentes, dans lequel la peau de style (3) comporte un moyen de fixation (9) sur hayon vers l'avant du véhicule.

8. Becquet selon la revendication 7, dans lequel la peau de style (3) comporte des fixations (9) positives démontables de type vis ou rivets expansifs à pétales.

## Patentansprüche

1. Spoiler (1) für eine Kraftfahrzeugheckklappe (2), aufweisend:
- eine Dekorhaut (3), die dem Spoiler (1) ein äußeres Erscheinungsbild verleiht und in Richtung des Hecks des Fahrzeugs vorsteht; und
- ein Verstärkungselement (4) der Dekorhaut (3), das an der Dekorhaut (3) angebracht ist, Befestigungsmittel (5) an der Heckklappe (2) aufweist und in Richtung des Hecks des Fahrzeugs mindestens ein Gehäuse, das ein technisches Gerät (7) aufnehmen kann, aufweist,
**dadurch gekennzeichnet, dass** das Verstärkungselement (4), wenn es an der Heckklappe (2) angebracht ist, zu einem Hohlkörper (10) ausgebildet ist und durch das Ausbilden eines Hohlkörpers (10) ein Verschlussstück an der Heckklappe (2) bildet.

2. Spoiler nach Anspruch 1, wobei die Dekorhaut (3) aus thermoplastischem Material besteht.

3. Spoiler nach Anspruch 1, wobei das Verstärkungselement (4) aus thermoplastischem Kunststoff besteht.

4. Spoiler nach einem der vorhergehenden Ansprüche, bei dem das Verstärkungselement (4) an seiner zum Heck des Fahrzeugs weisenden Basis eine Aussparung (13) aufweist, deren Form und Abmessungen so gewählt sind, dass eine Führungstrajektorie einer Einfassung (8) im wesentlichen senkrecht zu einer mittleren Ebene einer an einem Gehäuse der Heckklappe (2) befindlichen Klebespur ermöglicht wird, während die Einfassung (8) an der Heckklappe (2) angeklebt wird.

5. Spoiler nach einem der vorhergehenden Ansprüche, wobei das Verstärkungselement (4) mindestens eine konkave Form (12) aufweist, die mit mindestens einer komplementären konvexen Form (11) der Dekorhaut (3) zusammenwirkt, wobei diese Formen die Dekorhaut (3) auf dem Verstärkungselement (4) führen, positionieren und fixieren können.

6. Spoiler nach Anspruch 5, wobei das Verstärkungselement (4) mindestens eine Kerbe (12) aufweist, die mit mindestens einer Rippe (11) der Dekorhaut (3) zusammenwirkt.

7. Spoiler nach einem der vorhergehenden Ansprüche, bei dem die Dekorhaut (3) ein Befestigungsmittel (9) an der Heckklappe zur Fahrzeugfront hin aufweist.

8. Spoiler nach Anspruch 7, wobei die Dekorhaut (3) entfernbare positive Befestigungsmittel (9) vom Schraubentyp oder ausdehnbare Blütenblattnieten aufweist.

## Claims

1. Spoiler (1) for a tailgate (2) of a motor vehicle, comprising:
- a custom skin (3) providing the spoiler (1) with an external appearance and projecting towards the rear of the vehicle; and
- an element (4) for reinforcing the custom skin (3), which is secured to the custom skin (3), comprising means (5) for attaching to the tailgate (2), and comprising towards the rear of the vehicle at least one recess (6) which can accommodate technical equipment (7),
**characterised in that** the reinforcing element (4) is adapted to form a hollow body (10) once attached to the tailgate (2) and forms a closing part on the tailgate (2) by forming a hollow body (10).

2. Spoiler according to claim 1, wherein the custom skin (3) is made of thermoplastic material.

3. Spoiler according to claim 1, wherein the reinforcing element (4) is made of thermoplastic material.

4. Spoiler according to one of the preceding claims, wherein the reinforcing element (4) has at its base towards the rear of the vehicle a recess (13) whose shape and dimensions are chosen to allow an approach path for the rear window (8) that is substantially perpendicular to a mean plane of a bonding track located on a box of the tailgate (2), when bonding the rear window (8) on the tailgate (2).

5. Spoiler according to one of the preceding claims, wherein the reinforcing element (4) comprises at least one concave shape (12) cooperating with at least one complementary convex shape (11), of the custom skin (3), said shapes being adapted to guide, position and secure the custom skin (3) on the reinforcing element (4).

6. Spoiler according to claim 5, wherein the reinforcing element (4) comprises at least one notch (12) cooperating with at least one rib (11) of the custom skin (3).

7. Spoiler according to one of the preceding claims, wherein the custom skin (3) comprises a means (9) for attaching to the tailgate towards the front of the vehicle.

8. Spoiler according to claim 7, wherein the custom skin (3) comprises removable positive fasteners (9) such as screws or peel pop rivets.
